**Europäisches Patentamt**

**European Patent Office**

**Office européen des brevets**

(19)

(11) Veröffentlichungsnummer : **0 123 835**
**B1**

(12) EUROPÄISCHE PATENTSCHRIFT

(45) Veröffentlichungstag der Patentschrift :
07.09.88

(21) Anmeldenummer : 84102558.8

(22) Anmeldetag : 09.03.84

(51) Int. Cl.⁴ : **G 01 B   5/00,** G 01 B   7/00

(54) **Messarm einer Mehrkoordinaten-Messmaschine.**

(30) Priorität : 30.03.83 CH 1775/83

(43) Veröffentlichungstag der Anmeldung :
07.11.84 Patentblatt 84/45

(45) Bekanntmachung des Hinweises auf die Patenterteilung : 07.09.88 Patentblatt 88/36

(84) Benannte Vertragsstaaten :
CH DE FR GB IT LI SE

(56) Entgegenhaltungen :
DE-A- 1 912 605
FR-A- 1 396 040
FR-A- 1 413 261
GB-A- 1 211 418
GB-A- 2 019 576
US-A- 3 339 845
IBM TECHNICAL DISCLOSURE BULLETIN, Band 3,
Nr. 11, April 1961, Seite 43, New York, USA; R.M.
GUSTAFSON: "Hole sensing device"
MACHINE MODERNE, Band 56, September 1962,
Seiten 55-61, Paris, FR; A.N. RABINOVITCH: "Automatisation des procédés de fabrication en construction mécanique"
MACHINERY, Band 102, 3. April 1963, Seiten 763-766,
Burgess Hill, GB; A.W. ASTROP: "The Erickson diaphragm chuck and some applications"
DE-Zeitschrift "Idee", 12/82, S. 26, 29, 30 u. 31

(73) Patentinhaber : Wyler AG Wasserwaagen und Messwerkzeuge
Im Hölderli
CH-8405 Winterthur (CH)

(72) Erfinder : Stauber, Siegfried T.
Hüttenkopfstrasse 32
CH-8051 Zürich (CH)

(74) Vertreter : Quehl, Horst Max, Dipl.-Ing.
Seestrasse 640 Postfach 90
CH-8706 Meilen/Zürich (CH)

## Beschreibung

Die Erfindung betrifft einen Messarm einer Mehrkoordinaten-Messmaschine mit Messwertgebern für die Koordinatenmessung, wobei das freie Ende des Messarmes mindestens ein mechanisch wirkendes Tastorgan trägt, aufgrund dessen Auslenkung relativ zu der Befestigungstelle des Messarmes an der Messmaschine die Messwertgeber Signale erzeugen, die über einen Messwertumformer an eine Steuereinheit der Messmaschine weitergegeben werden.

Eine Mehrkoordinaten-Messmaschine hat in Richtung der einzelnen Koordinaten verfahrbare Messschlitten, von denen einer einen von ihm wegragenden Messarm trägt. Durch die Armform des Messarmes lässt sich das an seinem freien Ende befestigte Tastorgan an die verschiedenen Stellen eines zu messenden Objektes heranbewegen, ohne dass eine Kollision zwischen dem Messschlitten und dem Objekt auftritt. Der Tastarm soll einen möglichst geringen Durchmesser aufweisen, um das Messvolumen, innerhalb dem das Tastorgan bewegbar ist, möglichst wenig einzuschränken. Mehrkoordinaten-Messmaschinen werden von zahlreichen Firmen angeboten, von denen eine Auswahl in der Zeitschrift « Idee », 12/82, auf Seite 31, angegeben ist. Auf Seite 26 dieser Zeitschrift ist in teilweise geschnittener perspektivischer Darstellung ein Messarm abgebildet, der in einem starren Gehäuse induktive Messwertgeber als Weggeber für drei Koordinaten einschliesst. Ein nach gleichem Prinzip aufgebauter Messkopf ist durch die GB-A-1 211 418 bekannt.

Diese Darstellung zeigt deutlich den hohen Fertigungsaufwand für einen solchen als Messkopf bezeichneten Messarm. Bei einem derartigen bekannten Messarm besteht die Gefahr, dass das Gehäuse mit dem zu messenden Objekt oder auf andere Weise kollidiert, so dass durch die resultierende Beschädigung der Maschine die Messgenauigkeit nicht mehr gegeben ist. Das Heranführen des Tastorganes an das zu messende Objekt erfolgt durch manuelle Fernbedienung und erfordert entsprechenden Aufwand an Zeit und Geschicklichkeit.

Der Erfindung liegt die Aufgabe zugrunde, einen Messarm für eine Mehrkoordinaten-Messmaschine zu finden, der die erwähnten Nachteile vermeidet, indem er einfach aufgebaut ist, einen automatischen Kollisionsschutz hat, unmittelbar von Hand geführt werden kann und ein verhältnismässig grosses Messvolumen ermöglicht. Die Lösung dieser Aufgaben erfolgt aufgrund der Merkmale des Patentanspruchs 1.

Die Ausnutzung der Biegeverformung des Messarmes für die Messung gestattet es im Messarm auf zahlreiche beweglich gelagerte Präzisionsteile zu verzichten, so dass der Messarm sich einfach herstellen lässt. Da die Biegeverformungen des Messarmes selbst zu einer Abgabe von Messsignalen führen, die ihrerseits zu einer Bewegung des Messarmes bzw. der Messschlitten führen, lässt sich der Messarm unmittelbar von Hand führen und einer Kollision kann ausgewichen werden, bevor es zu einer unzulässigen Deformation kommt. Das Tastorgan muss nicht wie bisher relativ zu dem Messarm zur Erzeugung eines induktiven Wegsignals beweglich sein, so dass sich auch Vorteile bei der Konstruktion einer sicheren, einfachen, einfach und schnell bedienbaren Halterung für das Tastorgan ergeben. Die Ausnutzung der Biegeverformung des Messarmes ermöglicht schliesslich auch eine wesentliche Erhöhung der Messgenauigkeit, da sich durch die Länge des Armes und die Anbringung der Messwertgeber in entsprechend wesentlichem Abstand vom freien Armende, d. h. vom Tastorgan, durch die damit verbundene Hebelwirkung ein entsprechendes Uebersetzungsverhältnis für die Messbewegung ergibt. Dies wird besonders deutlich durch einen Vergleich mit den verhältnismässig kurzen Hebelarmen der Auslenkbewegung bei dem zuvor genannten bekannten Messkopf.

Vorteilhafte Ausgestaltungen der Erfindung sind Gegenstand der abhängigen Patentansprüche und sind ebenso wie weitere Vorteile der Erfindung der folgenden Beschreibung und zeichnerisch dargestellten Ausführungsbeispielen zu entnehmen. Es zeigen :

Fig. 1 eine stark verkleinerte, schematisch dargestellte Seitenansicht einer Mehrkoordinatenmessmaschine mit einem erfindungsgemässen Messarm,

Fig. 2 einen Längsschnitt durch eine Ausführungsform eines erfindungsgemässen Messarmes,

Fig. 3 einen Teilquerschnitt durch den Messarm entlang der Linie III-III der Fig. 2,

Fig. 4 einen Teilquerschnitt durch den Messarm entlang der Linie IV-IV der Fig. 3,

Fig. 5-8 Querschnittsdarstellungen des Messarmes nach Fig. 2 entlang den Linien V-V, VI-VI, VII-VII und VIII-VIII,

Fig. 9 eine Aufsicht auf den Befestigungsflansch des Messarmes nach Fig. 2,

Fig. 10 einen Querschnitt entlang der Linie X-X der Fig. 9 mit einem Kontaktschalter und einem Teil der Messmaschine,

Fig. 11 eine im Vergleich zu Fig. 9 und 10 vergrösserte Darstellung eines Teilquerschnittes im Bereich einer Befestigungsstelle des Flansches nach Fig. 9, 10,

Fig. 12a und Fig. 12b eine schematische Darstellung eines Messwertgebers und seiner Anordnung in einem Messarm in zwei verschiedenen Messpositionen,

Fig. 13 ein Bespiel einer elektrischen Schaltanordnung für den Messwertgeber,

Fig. 14 ein Spannfutter für ein Tastorgan eines erfindungsgemässen Messarmes,

Fig. 15 ein Querschnitt entlang der Linie XV-XV der Fig. 14,

Fig. 16 eine Querschnittdarstellung des Betätigungskolbens des Spannfutters nach Fig. 14, und

Fig. 17 einen Querschnitt durch einen in das Spannfutter nach Fig. 14 einsetzbaren Halter für ein quer abstehendes Tastorgan.

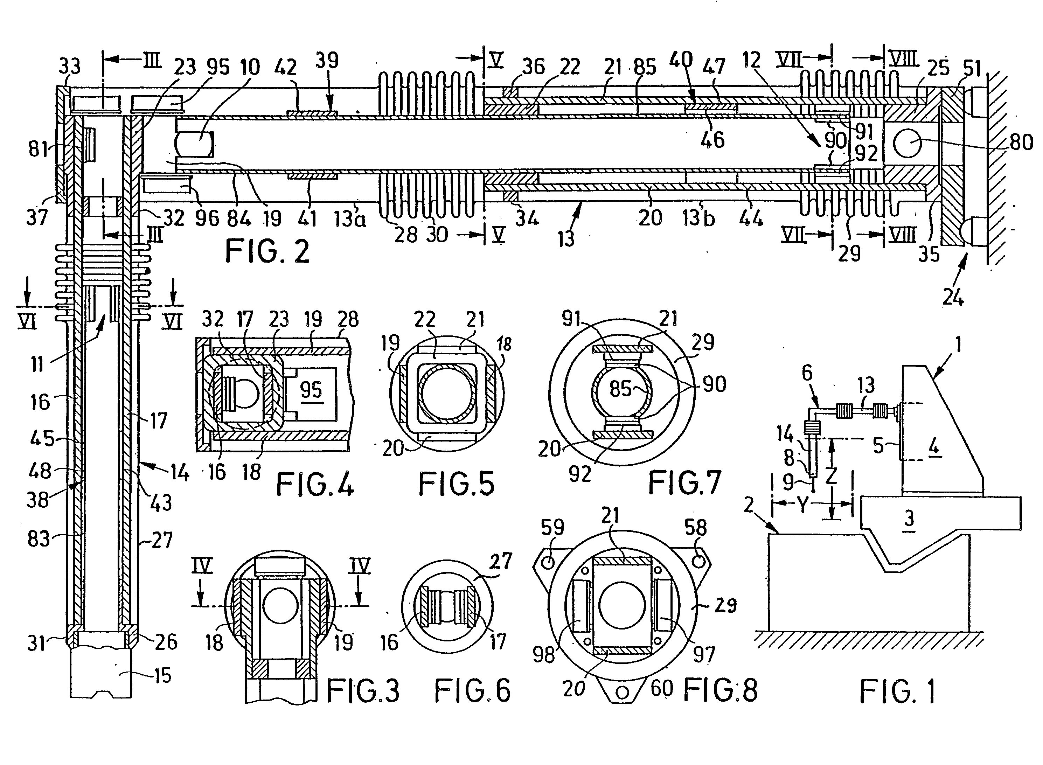

Die Mehrkoordinaten-Messmaschine 1 nach Fig. 1 hat einen feststehenden Messtisch 2 und drei in Richtung senkrecht zueinander durch nicht dargestellte Stellantriebe verfahrbare Messschlitten 3, 4 und 5. Es versteht sich, dass z. B. auch der Messtisch 2 als Messschlitten ausgeführt sein kann, wenn stattdessen das dem Messschlitten 3 entsprechende Teil der Maschine feststehend ist. Wesentlich ist nur, dass der Messarm 6 der Maschine relativ zu dem Messtisch 2 bzw. einem auf diesem befestigten, zu messenden Objekt in drei zueinander senkrecht stehenden Richtungen, d. h. den Koordinatenrichtungen, verstellbar ist. Durch Hin- und Herfahren des Messschlittens 4 ist der Messarm 6 oberhalb des Messtisches 2 in dem Bereich Y horizontal verstellbar, während durch Verfahren des Messschlittens 5, der in dem Messschlitten 4 geführt ist, der Messarm 6 in dem Bereich Z vertikal verstellbar ist. Die Verstellung in einem X-Bereich in Richtung der zweiten Horizontalkoordinate erfolgt durch die Relativverschiebung zwischen dem Messschlitten 3 und dem Messtisch 2.

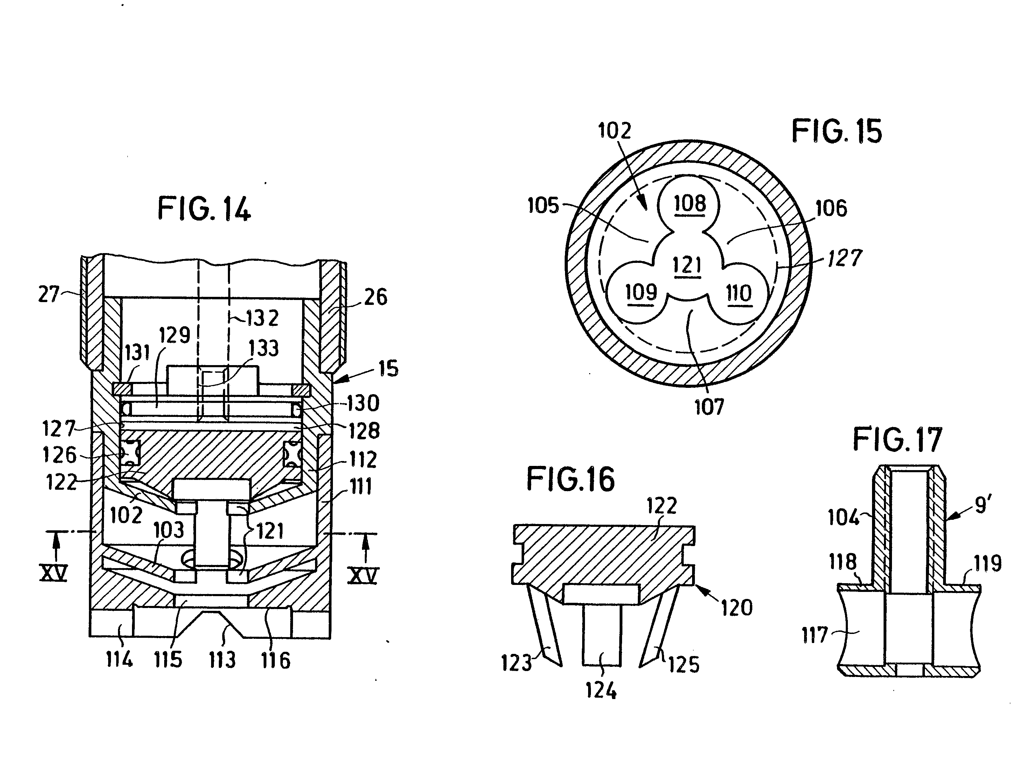

An dem freien Ende 8 des Messarmes 6 ist ein Tastorgan 9 befestigt, dessen freies Ende auf der nach oben gerichteten oberfläche eines zu messenden Objektes entlang fahrbar ist. Zum Entlangfahren an seitlichen oder nach innen gerichteten Flächen eines Werkstückes kann das Tastorgan 9 durch geeignet geformte andersartige Tastorgane ersetzt werden, wofür es lösbar an dem Messarm befestigt ist. Eine vorteilhafte Ausführung eines Spannfutters für das Tastorgan 9 ist im folgenden mit Bezug auf die Fig. 14 bis 16 beschrieben.

Das z. B. als Rubinkugel ausgeführte freie Ende des Tastorganes wird mit einer vorgegebenen und konstant geregelten Andruckkraft auf der zu messenden Oberfläche entlang bewegt, und die sich dabei ergebenden Bewegungen der Messschlitten werden vorzugsweise durch einen Computer mit Lernmodus erfasst. Für die Regelung der Andruckkraft des Kraftorganes sind in dem Messarm Messwertgeber eingebaut, die die durch die Andruckkraft sich ergebende Auslenkung für die drei Koordinatenachsen dem Computer bzw. einer NC-Steuereinheit übermitteln. Statt kontinuierlich kann die Abtastung des zu messenden Objektes durch das Tastorgan 9 auch punktweise erfolgen, wobei der Messwert jeweils nach Erreichen einer bestimmten Andruckkraft durch den Computer erfasst wird.

Gemäss der Erfindung sind die Messwertgeber 10,11 und 12 für die drei Koordinatenachsen X, Y und Z an einem Messarm 6 mit einem horizontalen und einem vertikalen Armteil 13, 14 vorgesehen, und das in Fig. 1 gezeigte Tastorgan lässt sich starr mittels eines Spannfutters 15 am freien Armende befestigen, so dass der Messarm bei Kontakt des Tastorganes 9 mit einem nicht dargestellten Objekt einer geringfügigen Biegebewegung ausgesetzt wird, die durch die Messwertgeber erfasst wird.

Um zu erreichen, dass jeder Messwertgeber nur eine Auslenkung des Tastorganes aufgrund einer Biegebewegung des Messarmes in einer Koordinatenachse misst, ist der Messarm in drei Abschnitte unterteilt, die nur in einer Ebene, d. h. in Richtung einer Koordinatenachse ausbiegbar sind. Die Messung einer Auslenkung des Tastorganes in der Y-Achse erfolgt in dem vertikalen Armteil 14.

Die Messung der Auslenkung in Richtung der X- und Z Achse erfolgt in je einem Abschnitt 13a und 13b des horizontalen Armteiles. Hierfür wird die Biegebewegung in jedem Armteil bzw. Armabschnitt 14, 13a und 13b jeweils von einem Paar von im Abstand zueinander parallel verlaufenden und im Querschnitt rechteckförmigen Biegebalken 16, 17 ; 18, 19 und 20, 21 aufgenommen. Die rechteckigen Querschnitte der drei Biegebalkenpaare 16, 17 ; 18, 19 und 20, 21 erstrecken sich in drei zueinander senkrechten Ebenen parallel zu jeweils einer der drei Koordinatenachsen. Wie der Darstellung der Fig. 2 zu entnehmen ist, biegen sich die Biegebalken 16, 17 in Y-Richtung, d. h. in der der Zeichnungsebene entsprechenden Ebene. Das Biegebalkenpaar 18, 19 des horizontalen Armabschnittes 13a biegt sich in X-Richtung, d. h. in einer zur Zeichnungsebene senkrechten Ebene. Das Biegebalkenpaar 20, 21 biegt sich in Z-Richtung, ebenfalls in einer die Zeichnungsebene enthaltenen Ebene, jedoch senkrecht zu dem Biegebalkenpaar 16, 17, entsprechend einer Auf- und Abwärtsbewegung des das Spannfutter 15 aufweisenden freien Armendes.

Die in Armlängsrichtung aneinander grenzenden Biegebalkenpaare sind über ein Zwischenstück 22, 23, an dem sie befestigt sind, starr miteinander verbunden, wie den Darstellungen der Fig. 4 und 5 zu entnehmen ist. Die Verbindung kann durch Kleben, Schweissen und/oder Verschrauben erfolgen. Das in der Mitte des horizontalen Armteiles vorgesehene Zwischenstück 22 sowie das im Winkelbereich des Messarmes vorgesehene Zwischenstück 23 haben einen quadratischen Hohlquerschnitt. Das zum Befestigungsbereich 24 des Messarmes hin gerichtete Ende des horizontalen Biegebalkenpaares 20, 21 und das zum freien Armende hin gerichtete Ende des Biegebalkenpaares 16, 17 sind jeweils an einem Endstück 25 bzw. 26 starr befestigt. Somit bilden die Biegebalkenpaare zusammen mit den ihre Enden miteinander verbindenden Zwischen- und Endstücken jeweils ein Parallelogramm, das zu einer eindeutig definierten Biegebewegung führt.

Um zu verhindern, dass die Biegebewegung der Biegebalkenpaare von einer Torsionsbewegung überlagert sein kann, sind die genannten Zwischen- und Endstücke 22, 23, 25 und 26 jeweils durch ein die Biegebalken mit Abstand umschliessendes Wellrohr 27, 28, 29 miteinander verbunden. Das Wellrohr kann über seine Gesamtlänge oder über einen Teil seiner Länge mit Wellungen 30 versehen sein. Das Wellrohr ist torsionssteif, jedoch leicht biegbar, so dass es die gewünschte Torsionssteifigkeit des Messarmes bewirkt, aber die Biegebewegung nicht behindert.

Um die Wellrohre starr mit den End- bzw. Zwischenstücken zu verbinden, sind sie mit ihrem zylindrischen Bereich über eine zylindrische Aussenfläche 31-35 der Endstücke 25, 26, des Zwischenstückes 23 oder eines starr mit dem Zwischenstück verbundenen Teiles 36 bzw. 37 geschoben und dort verklebt, verschweisst und/oder verschraubt.

Um am Messarm Biegeschwingungen zu verhindern oder zu dämpfen ist zwischen jedem Biegebalkenpaar 16, 17 ; 18, 19 ; 20, 21 ein Dämpfungsglied 38, 39, 40 vorgesehen. Jedes Dämpfungsglied ist U-förmig. Die freien Endes der beiden Querschnittsschenkel 41, 42 sind an dem einen Biegebalken, beispielsweise 17, 18 und 20 an der Stelle 43, 44 befestigt, während sich das Stegteil 45 bzw. 46 des Dämpfungsgliedes in geringem Abstand von beispielsweise 0,1-0,2 mm parallel zu dem anderen Biegebalken 16, 21 erstreckt. Der schmale Spaltraum 47, 48 zwischen dem Stegteil 45, 46 und dem angrenzenden Biegebalken 16, 21 ist durch ein zähflüssiges Medium, wie z. B. Schmierfett, gefüllt. Eine Biegebewegung des jeweiligen Biegebalkenpaares führt somit zu einer relativen Gleitbewegung zwischen dem Stegteil und dem angrenzenden Biegebalken mit entsprechenden gedämpften Scherkräften in dem zähflüssigen Medium.

Für das Ansprechen der Messwertgeber ist eine sehr geringe Auslenkung des Tastorganes 9 aufgrund des Kontaktes mit dem Objekt ausreichend, so dass die erforderlichen Biegebewegungen des Messarmes sehr gering sind. Bei der im folgenden noch näher beschriebene Ausführung und Anordnung der Messwertgeber kann eine Messung bereits mit einer Auslenkung des Tastorganes erfolgen, die nur $10^{-5}$ mm beträgt. Aufgrund der sehr geringen Biegebewegungen des Messarmes besteht keine Gefahr, dass durch eine zu grosse Biegebewegung bleibende Verformungen auftreten. Um jedoch eine Beschädigung des Messarmes durch unzulässige Kräfte, wie z. B. Schlagkräfte beim Anstossen, zu verhindern, ist die Befestigungseinrichtung, die den Messarm an der Koordinaten-Messmaschine befestigt, bei Ueberschreiten einer bestimmten Kraft am Messarm ausklinkbar. Die Befestigungseinrichtung kann dabei so ausgeführt sein, dass ein Ausklinken bereits bei einer Auslenkbewegung des Tastorganes 9 erfolgt, die mehr als 1 mm beträgt.

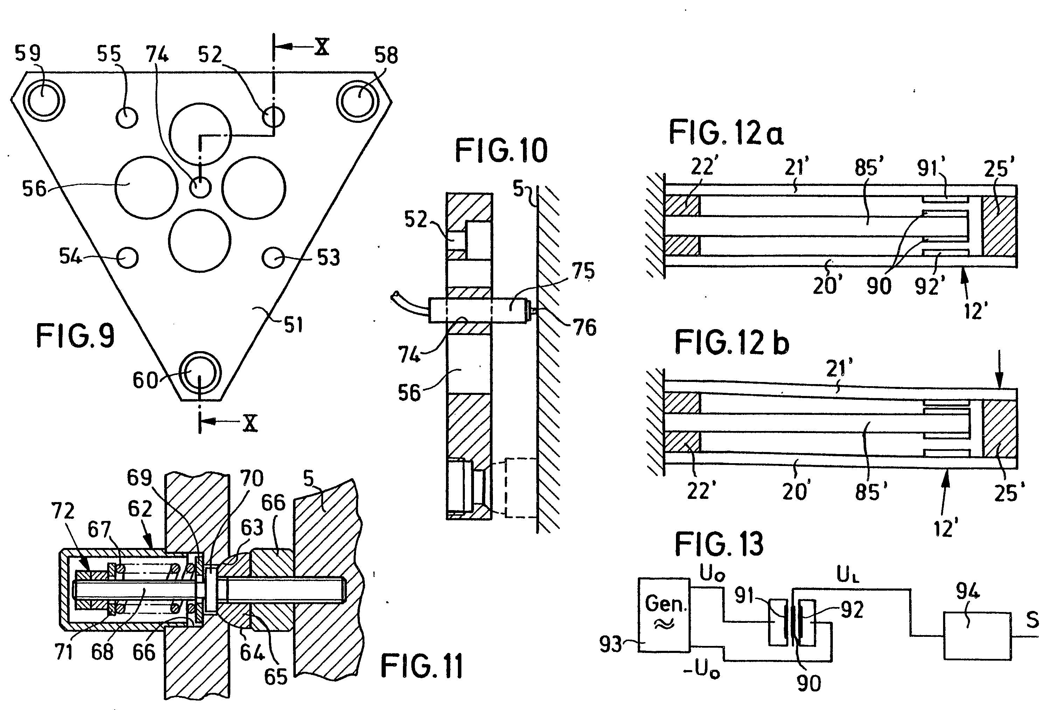

Ein Ausführungsbeispiel einer solchen Befestigungseinrichtung wird im folgenden anhand der Fig. 9-11 beschrieben. Diese Figuren zeigen eine Ausführungsform eines Befestigungsflansches 51, der mittels nicht dargestellter Schrauben, die durch die Senklöcher 52-55 des Flansches durchgeführt sind, starr mit dem Endstück 25 des Messarmes verbunden ist. Eine der grösseren Bohrungen 56, die zentralsymmetrisch zueinander am Flansch vorgesehen sind, dient der Hindurchführung der Kabelverbindung zwischen den einzelnen Messwertgebern und der elektronischen Steuereinheit der Messmaschine. An jeder der drei Ecken des Flansches 51 befindet sich eine Bohrung 58, 59, 60, von denen eine in Fig. 11 im Querschnitt dargestellt ist. Diese Bohrungen nehmen die in Fig. 11 sichtbare Ausklinkvorrichtung 62 auf. Durch diese Ausklinkvorrichtung wird eine kugelförmige Sitzfläche 63 der Bohrung 60 gegen eine entsprechend geformte Kugelfläche 64 eines Stützkörpers 65 elastisch gedrückt, der sich über einen Distanzkörper 66 an dem Messschlitten 5 der Messmaschine 1 abstützt. Der elastische Andruck erfolgt durch eine Schraubenfeder 67, die einen Gewindebolzen 68 umschliesst und einerseits über eine Zwischenlegscheibe 69 an einem Kragenteil 70 des Gewindebolzens und andererseits über eine Zwischenlegscheibe 71 an einem auf dem Gewindebolzen aufgeschraubten Kontermutterpaar 72 abgestützt ist. Der Schraubenbolzen 68 erstreckt sich durch die Flanschbohrung 60, den Stützkörper 65 und den Distanzkörper 66 hindurch und ist mit dem Messschlitten 5 verschraubt, so dass er zusammen mit den beiden anderen Gewindebolzen, die sich durch die Flanschbohrungen 58 und 59 erstrecken, den Messarm trägt. Der Schraubenbolzen 68 ist soweit eingeschraubt, dass sein Kragenteil 70 den die Kugelfläche 64 aufweisenden Stützkörper 65 und den Distanzkörper 66 zu einer starren Einheit gegen die Aussenseite des Messschlittens 5 presst. Wirkt an dem Messarm und damit an seinem Befestigungsflansch 51 eine Kraft, die ein bestimmtes vorgegebenes Mass überschreitet, so hebt sich der Befestigungsflansch 51 bzw. seine Sitzflächen 63 in den Bohrungen 58, 59, 60 von den Kugelflächen 64 der Stützkörper 65 ab, da hierbei die einstellbare Kraft der Feder 67 überschritten wird. Somit werden Ueberkräfte bzw. Stosskräfte von der Feder 67 der jeweiligen Ausklinkvorrichtung 62 aufgenommen.

Das Ausklinken, bzw. das Abheben einer Sitzfläche 63 von einem Stützkörper 65 führt zu einer Betätigung eines entsprechend der Darstellung in Fig. 10 in einer Flanschbohrung 74 befestigten Kontaktschalters 75, der der Messmaschine ein Stopsignal für die Unterbrechung der Messbewegung liefert. Der Kontaktstift 76 dieses als Präzisionsschalter ausgeführten Kontaktschalters 75 liegt an der Oberfläche des Messschlittens 5 an und bewirkt ein Schaltsignal bereits bei geringster Abhebebewegung der Kugelsitzfläche 63.

Zusätzlich zu den drei Messwertgebern 10, 11, 12 kann der Messarm 6 der Messmaschine 1 mit zwei elektronischen Pendeln 80, 81 versehen sein, die an die Steuereinheit der Messmaschine 1 Signale liefern, die eine Abweichung der Ausrichtung des Messarmes von den Geometrieachsen signalisieren. Die vollständig abgekapselten Pendel 80, 81 sind an zwei entgegengesetzten Enden des horizontalen Armteiles 13 des Messarmes 6 in zwei zueinander senkrecht und vertikal verlaufenden Ebenen befestigt. Das eine Pendel 80 spricht auf eine Auslenkung in der X-Richtung und das andere Pendel 81 auf eine Auslenkung in der Y-Richtung an. Dies ermöglicht eine Geometrievermessung der Messmaschine 1 in allen drei Koordinatenachsen, indem die Messschlitten 3, 4 und 5 der Messmaschine um ihre volle Bewegungslänge verfahren werden und die sich dabei ergebenden Pendelsignale über den Rechner der Messmaschine 1 zu einer genauen Geometriebestimmung verarbeitet werden. Aufgrund der Speicherung der Ergebnisse kann die Messmaschine, die sich durch ungenaue Ausrichtung oder ungerade Führungsbahnen der Messschlitten ergebenden Abweichungen von den Koordinatenachsen bei der Objektmessung als Korrektur berücksichtigen. Das Pendel 80 ermöglicht somit eine Geometrieerfassung in der Z- und X-Richtung und das Pendel 81 eine Geometrieerfassung in der Z- und Y-Richtung beim vertikalen Verfahren des Messschlittens 5. Der konstruktive Aufbau und die elektronische Schaltung der Pendel 80, 81 können entsprechend dem Gerät ausgeführt sein, das in der DE-PS 2 523 446 bzw. der entsprechenden US-PS 40 23 413 des gleichen Anmelders beschrieben ist. Die elektronische Schaltung kann auch gleich ausgeführt sein, wie für die Messwertgeber 10-12, entsprechend der folgenden sich auf die Fig. 13 beziehenden Beschreibung.

Das bevorzugte Prinzip der konstruktiven Anordnung und Ausführung der Messwertgeber 10-12 ist in schematischer Darstellung in den Fig. 12a und 12b wiedergegeben. In diesen Darstellungen ist jeweils ein Biegebalkenpaar dargestellt, das in Anlehnung an die konstruktive Ausführung im Armabschnitt 13b der Fig. 2 die Bezugsziffern 20', 21' aufweist, und allgemein einem der Biegebalkenpaare 16, 17 ; 18, 19 und 20, 21 nach Fig. 2 entspricht. Die Biegebalken 20', 21' sind mit ihren beiden Enden jeweils starr mit einem Zwischen- bzw. Endstück 22', 25' zu einem Parallelogramm verbunden. Am einen Ende der Anordnung, d. h. an dem Zwischenstück 22' ist ausserdem ein freiauskragender biegesteifen Balken 85' starr befestigt. Da dieser Balken 85' frei auskragt, greifen an seinem auskragenden Bereich keinerlei mechanische Kräfte an. Der Balken 85 erstreckt sich in Längsrichtung der gezeigten Anordnung, d. h. in Längsrichtung des Messarmes und parallel zu den Biegebalken 20', 21'. Bei Einwirkung von Biegekräfte an den Biegebalken 20', 21' ergibt sich somit eine Abstandsänderung zwischen dem biegesteifen Balken 85' und den Biegebalken 20', 21', die am freien Ende des Balken 85' am grössten ist. Um diese grösste Abstandsänderung für die Messung der Biegebewegungen der Biegebalken, bzw. des Messarmes auszunützen, ist im Bereiche dieses freien Balkenendes ein Messwertgeber 12' angebracht, der auf dieser Abstandsänderung zwischen dem Ende des biegesteifen Balkens 85' und den Biegebalken 20', 21' mit grosser Genauigkeit anspricht.

Es können verschiedenartige Messwertgeber verwendet werden, jedoch wird vorzugsweise ein kapazitiv wirkender Messwertgeber verwendet, dessen elektrische Schaltanordnung entsprechend der Darstellung in Fig. 13 ausgeführt sein kann. Die Ausführung des Messwertgebers 12' bzw. der Messwertgeber 10-12 entspricht im Prinzip demjenigen des Gerätes entsprechend der DE-PS 2 023 446 bzw. entsprechend der US-PS 4 023 413.

Das Messprinzip beruht auf der Aenderung der Kapazität zwischen der Kondensatorplatte 90 und den parallel zu dieser angeordneten Elektrodenplatten 91, 92, wenn zwischen diesen eine Abstandsänderung erfolgt. Der Kondensatorplatte 90 nach Fig. 13 entspricht ein Kondensatorplattenpaar 90, das am freien Ende des biegesteifen Balkens 85' befestigt ist. Den Elektrodenplatten 91, 92 entsprechende Elektrodenplatten 91', 92' sind an der Innenseite der Biegebalken 20', 21' dem Kondensatorplattenpaar 90 gegenüberliegend befestigt. Die Darstellung der Fig. 12a, 12b ist jedoch schematisch, denn der Abstand zwischen den Kondensatorplatten und den Elektrodenplatten in in praktischer Ausführung wesentlich geringer als dargestellt ist.

Die beiden Elektrodenplatten 91, 92 sind mit einem Generator 93 für die Erzeugung einer Wechselspannung $U_o$ verbunden, so dass sich an den Elektrodenplatten 91, 92 um 180° gegeneinander phasenverschobene Spannungen mit gleicher Amplitüde und Frequenz befinden. Somit heben sich die auf die Kondensatorplatte 90 wirkenden Spannungen gegenseitig auf, wenn sich diese genau zwischen den Elektrodenplatten 91, 92 befindet. Erfolgt eine Abstandsänderung zwischen der Kondensatorplatte 90 und den Elektrodenplatten, so entsteht durch die Aenderung der Kapazitäten zwischen den Elektrodenplatten und der Kondensatorplatte an dieser eine Wechselspannung $U_L$. Die Kondensatorplatte 90 steht in elektrischer Verbindung mit einem Messwertumformer 94, in dem diese Wechselspannung $U_L$ in ein Messsignal S umgeformt wird, dass dem Computer der Messmaschine zugeführt wird.

Die an das Kondensatorplattenpaar 90 und das Elektrodenplattenpaar 91, 92 unmittelbar angeschlossenen elektronischen Hilfsgeräte können jeweils in einem Verstärkerprint 95, 96, 97 untergebracht sein, der im Bereich des jeweiligen Messwertgebers im Arm an den in Fig. 2, 4 und 8 gezeigten Stellen befestigt ist.

Wie bereits erwähnt, können die Pendel 80, 81 die gleiche elektronische Schaltanordnungen nach Fig. 13 aufweisen. Ein dem Pendel 80 zugehöriger Verstärkerprint 98 ist in Fig. 8 schematisch dargestellt.

Der biegesteife Balken 83, 84, 85 des Armteiles 14 und der Armabschnitte 13a und 13b ist im dargestellten Beispiel als Rohr ausgeführt, dessen freies Ende abgeflacht ist, um das Kondensatorplattenpaar 90, 91 zu tragen. Die Herstellung der Balken 83, 84, 85 mit einem kreisrunden Querschnitt führt zu einem Balken mit besonders guter Formbeständigkeit. Ausserdem lässt sich ein solcher Balken besonders leicht mit hoher Genauigkeit herstellen, insbesondere wenn er aus Kohlefasern gewickelt wird. Grundsätzlich ist ein Material für die Balken zu wählen, das bei Temperaturänderungen keine Formveränderungen erleidet. Auch die übrigen Teile, wie z. B. die im Querschnitt rechteckförmigen Biegebalken werden vorzugsweise aus Kohlefasern oder Invar-Stahl hergestellt, um eine Beeinflussung der Mess-

genauigkeit durch Temperaturänderungen zu verhindern.

Die biegesteifen Balken 84, 85 der Armabschnitte 13a und 13b können vorzugsweise aus einem gemeinsamen Rohr entsprechend der Darstellung in Fig. 2 bestehen, das in seinem mittleren Bereich starr mit dem Zwischenstück 22 verbunden ist, das auch die Verbindung zwischen den unterschiedlich angeordneten Biegebalkenpaaren 18, 19 bzw. 20, 21 herstellt.

Aus der vorangehenden Beschreibung des Aufbaus eines erfindungsgemässen Messarmes wird deutlich, dass auch eine an irgendeiner Stelle des Messarmes im Abstand von dem Befestigungsflansch 51 unmittelbar auf den Messarm einwirkende Kraft über die Zwischenstücke 23, 22 oder das Endstück 26 auf die Biegebalken und damit auf die Messwertgeber übertragen wird, so dass ein entsprechendes Signal an die Steuerung der Messmaschine (NC-Steuerung) gelangt und die Messschlitten 3 bis 5 eine entsprechende Ausweichbewegung ausführen können. Ein erfindungsgemässer Messarm ermöglicht es auch, den Messarm unmittelbar von Hand zu führen, so dass das Tastorgan 9 eine gewünschte Raumbewegung ausführt und ein entsprechendes Bewegungsprogramm dem Computer der Mehrkoordinaten-Messmaschine eingegeben wird. Bisher war es hierfür erforderlich, die Antriebe der Messschlitten 3 bis 5 von einem Messpult aus von Hand zu steuern.

An dem starren Endstück 26 des Messarmes 6 ist ein besonders in Fig. 14 dargestelltes Spannfutter 15 befestigt, dessen Durchmesser zumindest angenähert dem Durchmesser des vertikalen Armteiles 14 entsprechen kann, der beispielsweise 50 mm beträgt. Das Spannfutter 15 lässt sich pneumatisch ferngesteuert zum Erfassen oder Freigeben eines Tastorganes 9 betätigen, das an bestimmter Stelle am Rande des Messtisches in Reserve aufbewahrt ist, indem die Bewegungssteuerung der Messmaschine aufgrund des eingegebenen Bewegungsprogrammes das Spannfutter an diese Stelle bewegt. Für die Ausführung verschiedener Messungen kann der Messarm sich somit automatisch ein geeignetes Tastorgan 9 holen.

Das Spannfutter 15 hat zwei in Richtung des Messarmes bzw. der Achse des Spannfutters hintereinander angeordnete Tellerfedern 102, 103, deren Form der Darstellung der Fig. 15 zu entnehmen ist. Zum Erfassen des Schaftes 104 eines Tastorganes oder Tastorganhalters 9 an drei Umfangsstellen hat jede Tellerfeder 102, 103 drei Greiflappen 105, 106, 107, deren freie Enden der Form des Schaftes 104 eines Tastorgans angepasst sind und somit bogenförmig sind. Diese Greiflappen sind durch drei in gleichem Winkel zueinander angeordnete kreisförmige Aussparungen 108, 109, 110 gebildet.

Die Tellerfedern 102, 103 bilden einen Teil von kreiszylindrischen Gehäuseteilen 111, 112, und indem zylindrische Abschnitte dieser Gehäuseteile übereinandergeschoben sind, sind sie mit ihren Tellerfedern genau zueinander zentriert. Auf gleiche Weise ist das innere Gehäuseteil 112 zu dem Endstück 26 des Messarmes 6 zentriert. Am freien Ende des äusseren zylindrischen Gehäuseteils 111 sind im Winkel von 90° zueinander prismatische Anschlagflächen 113, 114 sowie eine zu der Einführungsöffnung 115 des Spannfutters konzentrische ebene Anschlagfläche 73 vorgesehen. Diese Anschlagflächen 113, 114, 116 dienen der genauen Ausrichtung eines Tastorganes 9, 9', indem die Tellerfedern 102, 103, durch ihre in axialer Richtung wirkende Federkraft eine an dem Tastorgan vorgesehenen Bezugsfläche gegen die Anschlagfläche ziehen. Horizontal gerichtete Tastorgane haben einen zylindrischen Schaft, der für die Anlage an der Prismafläche 113 oder 114 bestimmt ist und mittels des in Fig. 17 dargestellten Halters an diese Anschlagfläche gezogen wird, indem er durch eine Querbohrung 117 eines zylindrischen Halteteiles 118 des Halters gesteckt ist und beidseitig über diesen hinausragt. Der Schaft 104 des Tastorganhalters 9 nach Fig. 17 wird durch die beiden Tellerfedern 102, 103 genau ergriffen. Die Bezugsfläche eines Vertikaltasters besteht aus einer Schulterfläche, die der Fläche 119 des zylindrischen Teiles 118 nach Fig. 17 entspricht und radial von dem zum Ergreifen durch die Tellerfedern 102, 103 bestimmten Schaft 104 absteht.

Das Halten des Schaftes 104 eines Tastorganes oder Tastorganhalters erfolgt durch die Rückstellkraft der Tellerfedern 102, 103. Um jedoch den Schaft ergreifen zu können, werden die Tellerfedern mittels eines durch Druckluft betätigbaren Kolbens 120 so ausgebogen, dass sich ihre zentrale Greiföffnung 121 aufweitet. Die Ausbiegung der oberen Tellerfeder 102 erfolgt durch den Kolbenkörper 122 (Fig. 16), während für die Ausbiegung der unteren Tellerfeder 103 am Kolben schräg zur Kolbenachse verlaufende Finger 123, 124 und 125 vorgesehen sind. Dabei erstrecken sich diese Finger durch die Aussparungen 108, 109 und 110 der oberen Tellerfeder 102 hindurch.

Der Kolben 122 ist durch eine Kolbendichtung 126 gegenüber der Innenwand 127 des zylindrischen Spannfutterteiles 112 abgedichtet. Der Zylinderraum 128 in dem zylindrischen Spannfutterteil 112 ist durch einen Deckel 129 mit einer Dichtung 130 nach oben hin abgedichtet, der durch einen in eine Nut eingesetzten Federring 131 in seiner Lage gehalten ist. Die Zufuhr der Druckluft für die Verstellung des Kolbens 122 erfolgt über eine durch Strichlinien angedeutete Schlauchleitung 132, deren Endnippel in eine Gewindebohrung 133 des Deckels 129 eingeschraubt ist. Diese Schlauchleitung 132 kann durch den Innenraum der Armteile 13 und 14 hindurchgeführt sein.

## Patentansprüche

1. Messarm einer Mehrkoordinaten-Messmaschine, mit Messwert-gebern (10, 11, 12, 12') für die Koordinatenmessung und einem mechanisch wirkenden Tastorgan (9), aufgrund dessen Auslenkung relativ zu der Befestigungsstelle (24) des Messarmes (6) an der Messmaschine (1) die Messwertgeber Signale erzeugen, die über einen Messwertumformer an eine Steuereinheit der Messmaschine weitergegeben werden, wobei der Messarm (6) für die Heranführung des an seinem freien Ende vorgesehenen Tastorganes (9) an das zu messende Objekt von der Messmaschine (1) frei absteht, dadurch gekennzeichnet, dass der Messarm (6) einen horizontalen und vertikalen Armteil (13, 13a, 14) hat, die starr miteinander verbunden sind, das Tastorgan (9) starr am freien Ende des Messarmes (6) befestigt ist und die Messwertgeber (10 ; 11 ; 12 ; 12') für jeweils eine der Messkoordinaten (X, Y, Z) in Abstand von dem freien Armende (15) an dem horizontalen und vertikalen Armteil (13, 14) angebracht sind, so dass sie auf die der Biegebewegung entsprechende Relativbewegung zwischen Teilen (18, 19, 84/85; 16, 17, 83 ; 20, 21, 84/85 ; 20',21',85') der Armteile (13, 13a, 14) ansprechen.

2. Messarm nach Anspruch 1, dadurch gekennzeichnet, dass der horizontale Armteil (13) aus zwei in horizontaler Richtung hintereinander angeordneten Armabschnitten (13a, 13b) besteht, die in um 90° verschiedene Richtungen ausbiegbar sind, so dass ihre Messwertgeber (10, 12) auf eine Biegedeformation in der X-Achse bzw. der Z-Achse des Mehrkoordinaten-Messsystems ansprechen.

3. Messarm nach Anspruch 2, dadurch gekennzeichnet, dass seine Armteile (13a, 13b, 14) jeweils zwei im Querschnitt rechteckförmige, parallel zueinander verlaufende Biegebalken (16, 17 ; 18, 19 ; 20, 21) aufweisen, deren Enden an Zwischen- bzw. Endstücken (22, 23, 25, 26) des Messarmes (6) starr befestigt sind, wobei die Zwischenstücke (22, 23) die Verbindung zu einem in Armrichtung angrenzenden Armteil bilden und die rechteckförmigen Querschnitte der Biegebalken zweier aneinandergrenzender Armteile (13a, 13b, 14) sich in senkrecht zueinander verlaufenden Ebenen befinden.

4. Messarm nach Anspruch 3, dadurch gekennzeichnet, dass die Biegebalken der Armteile (13a, 13b, 14) jeweils von einer Rohreinheit (27, 28, 29) umschlossen sind, die mindestens zum Teil als Wellrohr (30) ausgebildet ist und mit ihren Enden starr mit den Zwischen- bzw. Endstücken (22, 23, 25, 26) verbunden sind, so dass die Armteile torsionssteif sind.

5. Messarm nach Anspruch 3 oder 4, dadurch gekennzeichnet, dass sich durch die Armteile (13a, 13b, 14) des Messarmes jeweils ein frei auskragender biegesteifer Balken (83, 84, 85) erstreckt, wobei die biegesteifen Balken der horizontalen Armteile (13a, 13b) an dem Zwischenstück (22) zwischen diesen Armteilen, der Balken (83) des vertikalen Armteiles (14) an dem Endstück (26) starr befestigt ist und an dem freien Ende jedes Balkens jeweils einer der Messwertgeber (10, 11, 12) angeordnet ist, der auf eine Lageveränderung des freien Endes des Balkens relativ zu einer benachbarten Stelle eines Biegebalkens (16, 17 ; 18, 19 ; 20, 21) aufgrund einer Auslenkung des Tastorganes relativ zu dem Befestigungsbereich (24) des Messarmes (6) anspricht, indem das freie Ende des Balkens einen Teil (90) und mindestens einer der beiden zum Balken parallel angeordneten Biegebalken (20, 21) den anderen Teil (91, 92) von relativ zueinander beweglichen Teile des Messwertgebers (10, 11, 12) trägt.

6. Messarm nach einem der Ansprüche 1 bis 5, dadurch gekennzeichnet, dass zwischen sich in Armlängsrichtung parallel zueinander erstreckenden Armelementen (16, 17 ; 18, 19 ; 20, 21) ein Dämpfungsglied (38, 39, 40) für die Dämpfung mechanischer Biegeschwingungen des Messarmes angeordnet ist.

7. Messarm nach Anspruch 6, dadurch gekennzeichnet, dass das Dämpfungsglied (38, 39, 40) an einem der Biegebalken (17, 18, 20) befestigt ist und mit einem ebenflächigen Bereich (45, 46) sich in geringem Abstand parallel zu dem anderen Biegebalken (16, 19, 21) erstreckt, wobei der durch den geringen Abstand gebildete Spaltraum durch ein zähflüssiges Medium gefüllt ist.

8. Messarm nach Anspruch 5, dadurch gekennzeichnet, dass der Messwertgeber einen Differentialkondensator aufweist, wobei ein äusseres Elektrodenpaar (91, 92), das an der Innenseite der Biegebalken (20, 21) befestigt ist, zwischen sich mindestens eine Kondensatorplatte (90) einschliesst, die an dem freien Ende des biegesteifen Balkens (85) befestigt ist.

9. Messarm nach einem der Ansprüche 1 bis 8, dadurch gekennzeichnet, dass der Messarm (6) zur Bestimmung seiner Ausrichtung relativ zu den Koordinatenachsen mit zwei elektronischen Pendeln (80, 81) verbunden ist, wobei die Pendelrichtung des einen Pendels senkrecht verläuft zur Pendelrichtung des anderen Pendels.

10. Messarm nach einem der Ansprüche 1 bis 9, dadurch gekennzeichnet, dass eine Einrichtung für die Befestigung des Messarmes (6) an einer Messmaschine mindestens eine Ausklinkvorrichtung (62) mit einem Federorgan (67) aufweist, dass bei Ueberschreiten einer vorgegebenen Kraft am Messarm elastisch verformt wird, wobei ein Kontaktschalter (75) vorgesehen ist, der das Auftreten dieser Verformungsbewegung signalisiert.

11. Messarm nach einem der Ansprüche 1 bis 10, dadurch gekennzeichnet, dass das freie Ende des Messarmes (6) als pneumatisch betätigbares Spannfutter (15) ausgebildet ist.

12. Messarm nach Anspruch 11, dadurch gekennzeichnetdass die Spannorgane des Spannfutters aus Abschnitten (105, 106, 107) einer Tellerfeder (102, 103) gebildet sind, wobei die Tellerfeder zur Oeffnung des Spannfutters durch einen Pneumatikkolben (122) ausbiegbar ist.

13. Messarm nach Anspruch 12, dadurch gekennzeichnet, dass das Spannfutter mit einem vertikalen Armteil (14) des Messarmes (6) gleichachsig ist und in Achsrichtung mindestens zwei hintereinander angeordnete Tellerfedern (102, 103) aufweist, die durch den Kolben (122) ausbiegbar sind.

14. Messarm nach einem der Ansprüche 11 bis 13, dadurch gekennzeichnet, dass das Spannfutter stirnseitig mindestens eine Anschlagfläche (113, 114, 116) für eine Bezugsfläche an einem Tastorgan (9) oder einem Tastorganhalter (9') aufweist, die durch die Spannkraft des Spannfutters gegen die Anschlagfläche ziehbar ist.

## Claims

1. A measuring arm of a multi-coordinate measuring machine with detecting elements (10, 11, 12, 12') for the coordinate measurement and a mechanically acting probe member (9) on the basis of whose displacement relative to the fixing point (24) of the measuring arm (6) on the measuring machine, the detecting elements produce signals, which are forwarded by means of of a transducer to a control unit of the measuring machine, wherein, for approaching the probe member (9), provided on the free end of the measuring arm (6), to the object to be measured, the measuring arm projects freely from the measuring machine, characterized in, that the measuring arm (6) has a horizontal and vertical arm part (13, 13a, 14), which are rigidly interconnected, the probe member (9) being rigidly fixed to the free end of the measuring arm (6) and the detecting elements (10, 11, 12, 12') for in each case one of the measuring coordinates (X, Y, Z) are fitted to the horizontal and vertical arm parts (13, 14) at a distance from the free arm end (15), so that they respond to the relative movement between parts (18, 19, 84/85 ; 16, 17, 83 ; 20, 21, 84/85 ; 20', 21', 85') of the arm parts (13, 13a, 14), which is due to their bending movement.

2. A measuring arm according to claim 1, wherein the horizontal arm part (13) comprises two horizontally successively arranged arm portions (13a, 13b), which can be bent out in directions differing by 90°, so that their detecting elements (10, 12) respond to a bending deformation in the X- or Z-axis of the multi-coordinate measuring system.

3. A measuring arm according to claim 2, wherein its arm parts (13a, 13b, 14) in each case have two cross-sectionally rectangular, parallel bender bars (16, 17 ; 18, 19 ; 20, 21), whose ends are rigidly fixed to middle or end pieces (22, 23, 25, 26) of the measuring arm (6), the middle pieces (22, 23) forming the connection to an adjacent arm part in the arm direction and the rectangular cross-section of the bender bars of two adjacent arm parts (13a, 13b, 14) being located in planes which are perpendicular to one another.

4. A measuring arm according to claim 3, wherein the bender bars (13a, 13b, 14) are in each case surrounded by a tube unit (27, 28, 29), which is at least in part constructed as a corrugated tube (30) and whose ends are rigidly connected to the middle or end pieces (22, 23, 25, 26), so that the arm parts are torsionally stiff.

5. A measuring arm according to claims 3 or 4, wherein in each case one freely projecting bending-stiff bar (83, 84, 85) extends through the measuring arm parts (13a, 13b, 14) the bending-stiff bar of the horizontal arm parts (13a, 13b) being rigidly fixed to the middle piece (22) between said arm parts, whilst the bar (83) of the vertical arm part (14) is rigidly fixed to the end piece (26) and on the free end of each bar is arranged in each case one of the detecting elements (10, 11, 12), which responds to a position change of the free bar end relative to an adjacent point of a bender bar (16, 17 ; 18, 19 ; 20, 21), due to a deflection of the probe member relativ to the fixing area (24) of the measuring arm (6), in that the free end of the bar carries one part (90) and at least one of the two bender bars (20, 21) arranged parallel to said bar carries the other part (91, 92) of detecting element parts which can be moved relative to one another.

6. A measuring arm according to one of the claims 1 to 5, wherein a damping member (38, 39, 40) for damping mechanical bending vibrations of the measuring arm is provided between parallel arm elements (16, 17 ; 18, 19 ; 20, 21) extending in the longitudinal direction of the arm.

7. A measuring arm according to claim 6, wherein the damping member (38, 39, 40) is fixed to one of the bender bars (17, 18, 20) and a planar area (45, 46) of it extends at a limited distance parallel to the other bender bar (16, 19, 21), the gap formed by the limited spacing being filled with a viscous medium.

8. A measuring arm according to claim 5, wherein the detecting element has a differential capacitor, an external electrode pair (91, 92) fixed to the inside of the bender bars (20, 21) enclosing between them at least one capacitor plate (90), which is fixed to the free end of the bendingstiff bar (85).

9. A measuring arm according to one of the claims 1 to 8, wherein for determining its alignment relative to the coordinate axes, the measuring arm (6) is connected to two electronic pendulums (80, 81), the direction of one pendulum being at right angles to that of the other pendulum.

10. A measuring arm according to one of the claims 1 to 9, wherein a device for fixing the measuring arm (6) to a measuring machine has at least one release mechanism (62) with a spring member (67), which elastically deforms when a predetermined force on the measuring arm is exceeded, a contact switch (75) being provided which indicates that this deformation movement has taken place.

11. A measuring arm according to one of the claims 1 to 10, wherein the free end of the measuring arm (6) is constructed as a pneumatically operable chuck (15).

12. A measuring arm according to claim 11, wherein the clamping members of the chuck are formed by portions (105, 106, 107) of a cup spring it being possible to bend the latter by means of a pneumatic piston (122) for opening the chuck.

13. A measuring arm according to claim 12, wherein the chuck is coaxial to a vertical arm part (14) of the measuring arm (6) and axially has at least two succesively arranged cup springs (102, 103), which can be bent out by the piston.

14. A measuring arm according to one of the claims 11 to 13, wherein frontally the chuck has at least one stop face (113, 114, 116) for a reference surface on a probe member (9) or a probe member holder (9'), which can be drawn against the stop face by the clamping force of the chuck.

**Revendications**

1. Bras de mesure d'une machine de mesure selon plusieurs coordonnées, avec des émetteurs de signaux de mesure (10, 11, 12, 12') pour la mesure des coordonnées et avec un palpeur (9) à action mécanique, les émetteurs de signaux de mesure produisant des signaux en fonction du déplacement de ce palpeur par rapport au point de fixation (24) du bras de mesure (6) sur la machine de mesure (1), signaux qui sont transmis au moyen d'un convertisseur de signaux de mesure à une unité de commande de la machine de mesure, le bras de mesure (6) étant écarté librement de la machine de mesure (1) pour amener le palpeur (9), prévu à son extrémité libre, en contact avec l'objet à mesurer, caractérisé en ce que le bras de mesure (6) comporte un demi-bras horizontal (13, 13a) et un demi-bras vertical (14), ceux-ci étant reliés rigidement l'un avec l'autre, en ce que le palpeur (9) est fixé rigidement à l'extrémité libre du bras de mesure (6) et en ce que les émetteurs de signaux de mesure (10, 11, 12, 12') sont disposés, chacun pour une des coordonnées à mesurer (X, Y, Z), à distance de l'extrémité libre (15) du bras, sur les demi-bras horizontal et vertical (13, 14), de façon telle qu'ils réagissent aux mouvements relatifs, correspondant aux mouvements de flexion, entre les pièces (18, 19, 84/85 ; 16, 17, 83 ; 20, 21, 84/85 ; 20', 21', 85') des demi-bras (13, 13a, 14).

2. Bras de mesure suivant la revendication 1, caractérisé en ce que le demi-bras horizontal (13) comporte deux éléments de bras (13a, 13b) disposés horizontalement l'un derrière l'autre, qui sont flexibles dans différentes directions sur 90°, de telle sorte que leurs émetteurs de signaux de mesure (10, 12) réagissent à une déformation de flexion suivant l'axe X ou l'axe Z du système de mesures selon plusieurs coordonnées.

3. Bras de mesure suivant la revendication 2, caractérisé en ce que ses demi-bras (13a, 13b, 14) présentent chacun deux barres de flexion (16, 17 ; 18, 19 ; 20, 21), de section droite rectangulaire, parallèles les unes par rapport aux autres, et aux extrémités desquelles sont fixées rigidement des pièces intermédiaires ou d'extrémité (22, 23, 25, 26) du bras de mesure (6), les pièces intermédiaires (22, 23) formant la liaison, dans la direction du bras, avec l'élément de bras contigu, et les sections rectangulaires des barres de flexion de deux éléments de bras contigus (13a, 13b, 14) étant situées dans des plans perpendiculaires l'un par rapport à l'autre.

4. Bras de mesure suivant la revendication 3, caractérisé en ce que les barres de flexion des éléments de bras (13a, 13b, 14) sont chacunes enveloppées d'un élément de tube (27, 28, 29) qui forme, au moins en partie, un tube à ondes (30) et, par leur extrémité, sont fixées rigidement aux pièces intermédiaires ou d'extrémité (22, 23, 25, 26), de façon que les éléments de bras soient rigides à la torsion.

5. Bras de mesure suivant l'une quelconque des revendications 3. ou 4, caractérisé en ce qu'un longeron rigide à la flexion (83, 84, 85) s'étend en porte-à-faux libre dans chaque élément de bras (13a, 13b, 14) du bras de mesure, les longerons rigides à la flexion des éléments de bras horizontaux (13a, 13b) étant fixés rigidement à la pièce intermédiaire (22) entre ces éléments de bras, le longeron (83) du demi-bras vertical (14) étant fixé rigidement à la pièce d'extrémité (26) et l'un des émetteurs de signaux de mesure (10, 11, 12) étant chaque fois placé à l'extrémité libre de chaque longeron, émetteur qui réagit à un changement de position de l'extrémité libre du longeron par rapport à une position voisine d'une barre de flexion (16, 17 ; 18, 19 ; 20, 21) à la suite d'une déviation du palpeur par rapport à la zone de fixation (24) du bras de mesure (6), l'extrémité libre du longeron portant une pièce (90), et au moins une des deux barres de flexion (20, 21) disposées parallèlement aux longerons portant l'autre pièce (91, 92) des pièces de l'émetteur de signaux de mesure (10, 11, 12) mobiles l'une par rapport à l'autre.

6. Bras de mesure suivant l'une quelconque des revendications 1. à 5, caractérisé en ce qu'un élément amortisseur (38, 39, 40) destiné à l'amortissement des oscillations en flexion du bras de mesure est disposé entre les éléments de bras (16, 17 ; 18, 19 ; 20, 21) s'étendant parallèlement les uns par rapport aux autres dans la direction du bras.

7. Bras de mesure suivant la revendication 6, caractérisé en ce que l'élément amortisseur (38, 39, 40) est fixé à une des barres de flexion (17, 18, 20) et s'étend suivant une zone plane parallèlement et à faible distance des autres barres de flexion (16, 19, 21), l'espace formé par cette faible distance étant rempli par un fluide à consistance visqueuse.

8. Bras de mesure suivant la revendication 5, caractérisé en ce que le capteur présente un condensateur différentiel, comportant un couple d'électrodes externes (91, 92) fixées aux faces internes des barres de flexion (20, 21), et incluant au moins une armature de condensateur qui est fixée à l'extrémité libre du longeron rigide à la flexion (85).

9. Bras de mesure suivant l'une quelconque des revendications 1 à 8, caractérisé en ce que le bras de mesure (6), pour la détermination de sa direction par rapport aux axes de coordonnées, est relié à deux pendules électroniques (80, 81), la direction d'un premier pendule étant perpendiculaire à celle du deuxième.

10. Bras de mesure suivant l'une quelconque des revendications 1. à 9, caractérisé en ce qu'un dispositif pour la fixation du bras de mesure (6) sur une machine de mesure présente au moins un dispositif de déclenchement (62) avec un organe formant ressort (67) et en ce qu'il apparait une déformation élastique en cas de dépassement d'une force donnée, un contact (75) étant prévu pour signaler l'apparition de cette déformation.

11. Bras de mesure suivant l'une quelconque des revendications 1, à 10, caractérisé en ce que l'extrémité libre du bras de mesure (6) est formée d'un mandrin de serrage (15) commandé pneumatiquement.

12. Bras de mesure suivant la revendication 11, caractérisé en ce que les organes de serrage du mandrin de serrage sont constitués d'éléments (105, 106, 107) d'un disque-ressort (102, 103), ce disque-ressort étant flexible sous l'effet d'un piston pneumatique (122) pour permettre l'ouverture du mandrin de serrage.

13. Bras de mesure suivant la revendication 12, caractérisé en ce que le mandrin de serrage a le même axe qu'un demi-bras vertical (14) du bras de mesure (6) et présente dans le sens de son axe au moins deux disques-ressort (102, 103) disposés l'un derrière l'autre et qui peuvent être fléchis sous l'effet du piston (122).

14. Bras de mesure suivant l'une quelconque des revendications 11. à 13, caractérisé en ce que le mandrin de serrage présente, de face, au moins une surface de butée (113, 114, 116) pour une surface de référence sur un palpeur (9) ou un porte-palpeur (9'), cette surface pouvant être attirée contre la surface de butée sous l'effet de la force de serrage du mandrin.

FIG. 2

FIG. 4 FIG. 5 FIG.7

FIG.3 FIG.6 FIG:8 FIG. 1

0 123 835

FIG. 9

FIG.10

FIG. 12a

FIG. 12 b

FIG.11

FIG. 13

0 123 835

FIG. 14

FIG. 15

FIG. 16

FIG. 17

0 123 835